# EUROPEAN PATENT SPECIFICATION

(11) **EP 1 223 832 B1**
(45) Date of publication and mention of the grant of the patent: **24.09.2003**
(21) Application number: 00938994.1
(22) Date of filing: 06.07.2000
(51) Int. Cl.: A47B 87/02, A47B 81/06, A47B 47/04

(54) **A COMPLEX OF ELEMENTS FOR COMPOSING FURNISHING ITEMS**
ELEMENTANLAGE ZUM AUFBAUEN VON MÖBELN
COMPLEXE D'ELEMENTS POUR MONTER DES MEUBLES

(30) Priority: 28.10.1999 IT RN990031
(43) Date of publication of application: 24.07.2002
(73) Proprietor: Mauri, Mauro, 47835 Saludecio (RN) (IT)
(72) Inventor: Mauri, Mauro, 47835 Saludecio (RN) (IT)
(74) Representative: Lanzoni, Luciano
(86) International application number: IB0000915
(87) International publication number: WO01032056

(56) References cited:
- DE-U- 29 603 129
- FR-A- 2 692 120
- GB-A- 2 275 861
- US-A- 4 403 886

## Description

### Technical Field

The present invention relates to a complex of elements for composing furnishing items.

### Background Art

Reticular structures are known, constituting the frame of furnishing items, in which metal cross members and uprights are mutually welded.

The furnishing items thereby obtained have the drawback of not being able to undergo any modification or enlargement in any way, to meet new requirements.

It is also known that, to realise reticular structures with a greater degree of modularity and versatility, the uprights and cross members can be mutually connected through the use of particular clamps, which have appropriate seats for the insertion of the cross members and of the uprights themselves. The clamps are then tightened by means of appropriate tightening means, for instance screws and nuts.

This type of complex of elements too, however, is not free from drawbacks. In particular, the assembly and disassembly of even a single element is not easy. Moreover, the set is not stable until the clamp is completely tightened. The number of uprights and cross members concurring in a single clamp is such as to make it impossible to replace or remove an individual piece without rendering the entire structure unstable. The structure is stable only when the clamps are fully tightened.

It is practically impossible to obtain structures with complicated geometric shapes in a rapid and simple manner.

Multiple-way connecting elements are known, presenting a seat for each way, suitable for pressure insertion of the uprights and cross members. Although assembly of the elements is thereby simplified, this solution is also not free from drawbacks.

It is generally impossible to obtain complicated geometric shapes. Given the characteristics of the connecting elements, the structure cannot be stable, even after its completion.

All known systems for composing furnishing items generally present the limit of needing to be constructed specifically for the particular furnishing item desired or for its particular geometric shape. Therefore, in order to obtain furnishing items of various kinds, one is forced to construct many different types of elements.

### Disclosure of Invention

The aim of the present invention is to overcome the drawbacks described above, making available a complex of elements for composing furnishing items which comprises few simple elements and allows to obtain, simply and rapidly, stable and easily modifiable structures.

Another aim of the present invention is to make available a complex of elements which allows to obtain geometrically complex structures, easily adaptable to changing requirements.

A further aim of the present invention is to make available a complex of elements which allows to obtain vibration-proof modular structures to support stereophonic sets, acoustic diffusers and the like.

These aims and others besides, which shall become more readily apparent in the course of the description that follows, are achieved, in accordance with the present invention, by a complex of elements for composing furnishing items as set out in the enclosed claims.

### Description of the Drawings

The invention is described in greater detail hereafter with the aid of the drawings, which show an embodiment provided purely by way of non limiting example.
- Figure 1 shows an exploded perspective view of a first possible combination of the complex of elements of the present invention.
- Figure 2b and 2a show a schematic plan view respectively of the combination of cross members of Figure 1 and of a possible alternative thereto.
- Figure 3 shows an exploded perspective view of a second possible combination of the complex of elements of the present invention.
- Figure 4 shows a partial exploded longitudinal section of an element of the complex of the present invention.
- Figure 5 shows a partial side view of the element shown in Figure 4, once it is assembled.
- Figure 6 shows a particular type of cross member comprised in the complex of elements of the present invention.
- Figures 7a, 7b, 7c, 7d show the axial sections of different types of cross member comprised in the complex of elements of the present invention.
- Figures 8a and 8b show two different combination possibilities for the cross members.
- Figure 9 shows the plan development of the combination shown in Figure 3.

### Description of the Illustrative Embodiments

With reference to the figures, the complex of elements for composing furnishing items comprises at least a plurality of uprights 1 and at least a plurality of cross members 2 connectable to said uprights 1.

The uprights 1 and the cross members 2 are preferably made of metallic material. In particular the metal can be aluminium or an aluminium-based alloy, to provide the structure with solidity and lightness.

Each cross member 2 has at least a first and a second indentation 4, 5 substantially transverse to the main development of the cross member 2 in order mutually to fix the cross members 2.

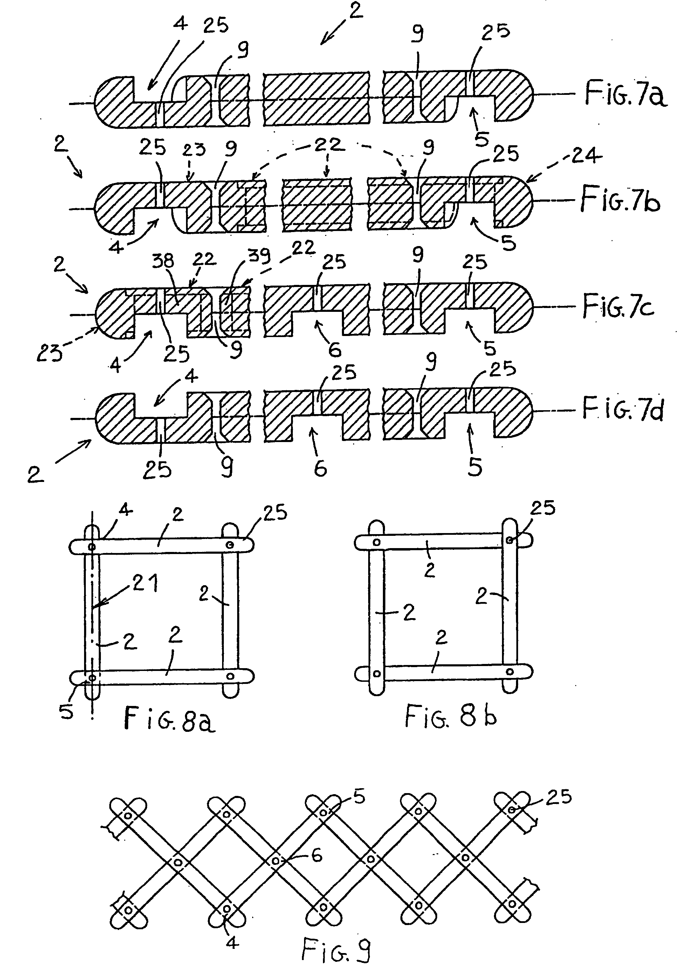

In a preferred embodiment of the present invention, shown in Figures 7a, 7b, 7c, 7d, the indentations 4, 5 involve half the section of the cross member 2 in order not to determine differences in height between the surfaces of two mutually fixed cross members 2.

By combining cross members 2 of various lengths, with indentations 4, 5 having various axial orientations relative to a longitudinal axis 21 of the cross members 2, it is thus easy to obtain planar reticular structure with complicated geometric shape.

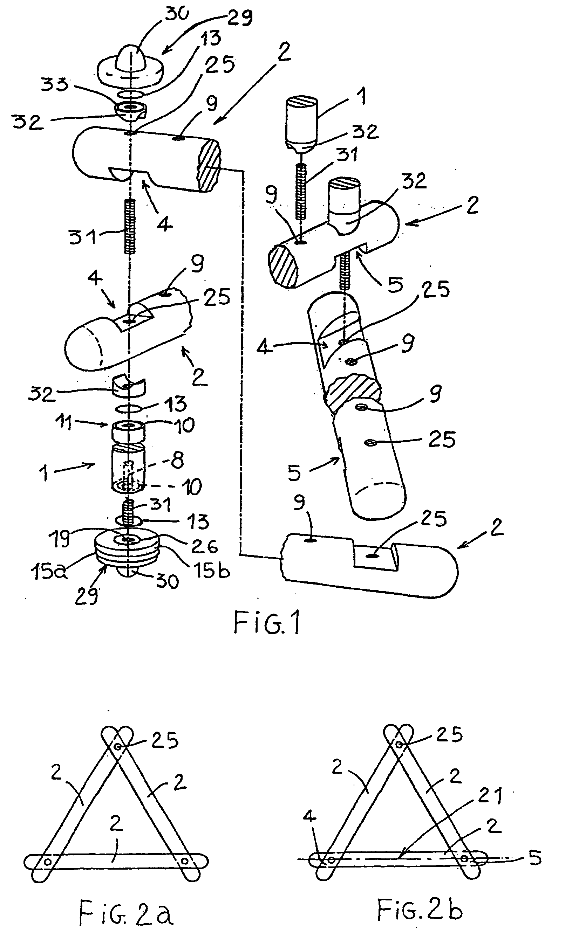

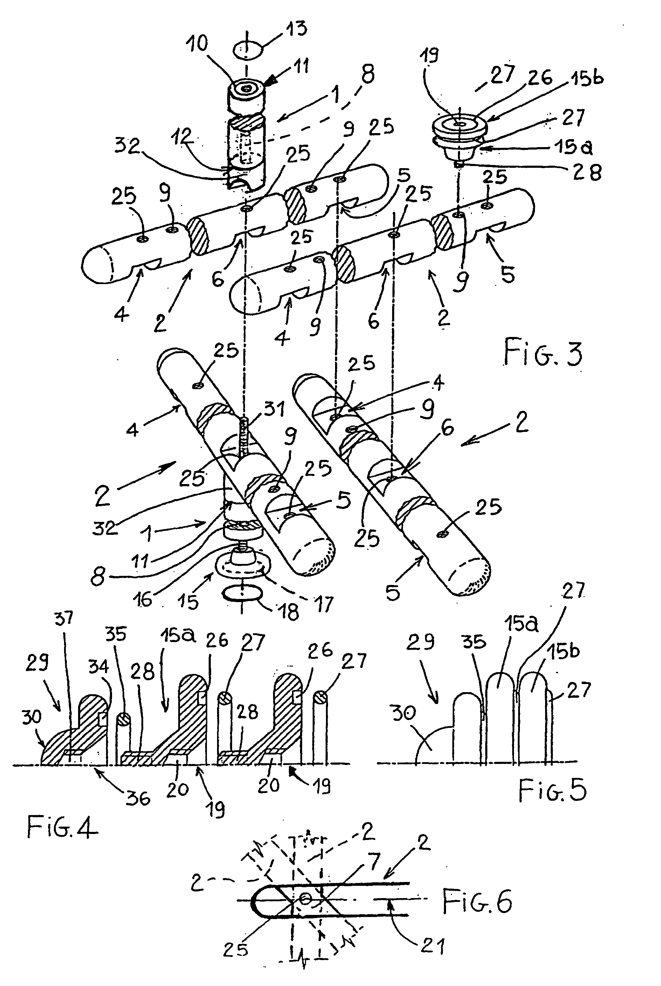

A particular type of cross member 2, as shown in Figures 1, 2a and 2b, has its first and its second indentation 4, 5 axially inclined by a predetermined angle relative to the longitudinal axis 21 of the cross member 2 and converging. In this way, depending on the value of this angle, as well as on the number and length of the cross members 2 in use, it is possible to obtain polygons and broken lines of any kind.

In the examples shown in Figures 1, 2 and 2b, the angle is equal to 60° and the cross members 2 have the same length. It is thus possible to obtain closed figures, such as equilateral triangles (as shown in the figures), regular hexagons, regular broken lines and all possible combinations.

A second type of cross member 2, as shown in Figures 3, 8a and 8b, has its first and second indentation 4, 5 axially perpendicular to the longitudinal axis 21 of the cross member 2. It is thus possible to obtain squares (as shown in the figures), rectangles, broken lines, or saw tooth structures and all possible combinations.

A third type of cross member 2, shown in Figure 6, has at least a shaped indentation 7 identified by the intersection of an indentation axially perpendicular to the longitudinal axis 21 of the cross member 2 with an indentation that is axially inclined relative to the same axis. The shaped indentation 7 allows, as shown in the figure, the fixed coupling of two cross members 2 according to any one of the inclinations among those of the cross members 2 shown in dashed lines in Figure 6.

Advantageously, the combination of these three types of cross members 2 allows for an enormous versatility in the creation of geometric shapes.

In a preferred embodiment of the invention, as shown in Figure 7a and 7d, the first and the second indentation 4, 5 are oriented towards opposite faces of an axial plane of the cross member 2. This allows to construct polygons having any number of sides using only this type of cross member 2 provided with indentations 4, 5 having the appropriate axial orientation. Moreover, once closed, the polygon tends to remain stable also without the aid of locking or tightening means, due to the alternation of fixed couplings to opposite indentations 4, 5. This allows for easy handling of the structure during its assembly. This disposition is shown in Figures 1 and 2a for the case of an equilateral triangle, and in Figure 8b in the case of the square.

In an alternative embodiment of the invention, shown in Figures 7b and 7c, the first and the second indentations 4, 5 are oriented towards a same face of an axial plane of the cross member 2 itself. Using only this type of cross member 2 it is possible to obtain regular polygons with an even number of sides, as shown in Figure 8a in the case of the square. To obtain polygons with an odd number of sides it is necessary, to close the figure, to use a cross member 2 having the first and the second indentations 4, 5 on opposite sides, as shown in Figure 2 in the case of the equilateral triangle. The closed polygon thus obtained is not stable without appropriate fastening or tightening means.

A fourth type of cross member 2, whereof some examples are shown in Figures 3, 7c, 7d, is provided with at least a third indentation 6 situated in an intermediate position between the first and the second indentation 4, 5. The third indentation 6 can be oriented in any direction, to allow particular crossings or branches to the reticular structure obtainable by coupling the cross members 2. In particular, using cross members 2 of the type shown in Figure 7d, having the second indentation 5 and the third indentation 6 on the same side and the first indentation 4 on the opposite side, together with two cross members 2 of the type shown in Figure 7c and having the three indentations 4, 5, 6 all on the same side, it is possible to obtain planar reticular structures of the type shown in Figure 9. Figure 3 shows the central part of the structure of Figure 9.

The same structure could be obtained without using the two cross members 2 of the type shown in Figure 7c.

To extend the structure of the item to be composed in a direction orthogonal or transverse to the laying plane of a set of coupled cross members 2, the uprights 1 are used.

The uprights 1 can be engaged to the cross members 2 at least in correspondence with the indentations 4, 5, 6, 7.

Conveniently, each upright 1 has at least at a first extremity 11 a pin 31 positioned coaxially to the upright 1 itself. The pin 31 can be engaged at least in a through hole 25 obtained in correspondence with each indentation 4, 5, 6, 7 of the related cross members 2. Moreover, the upright 1 has at least at its second extremity 12, first coupling means 8 for at least the pin 31 of a consecutive upright 1. In this way, as shown in Figure 3, it is possible to connect and lock two uprights 1 to each other and to two related cross members 2 in correspondence with a fixed coupling. In each node involved by the connection of the uprights 1, therefore, the structure is consolidated and fastened in a removable manner with no need for additional connecting elements.

In a preferred embodiment of the invention, the first coupling means 8 comprise a nut screw of pre-determined length, whereon can be engaged a thread obtained on the pin 31. Thus, the structure is assembled simply by screwing the pin 31 onto the upright 1, inserting the pin 31 into the through holes 25 of two cross members 2 fixed to each other and screwing the consecutive upright 2 onto the pin 31.

The coupling means can also be quick-coupling means, such as spring-loaded couplings or the like. In this case, the extremities of the pin 31 shall be provided with the appropriately fitted out head.

Moreover, advantageously, the pin 31 is removably engaged at least to the first extremity 11 of the upright 1 through coupling means identical to the first coupling means 8 present at the second extremity 12. In this way, the pin 31 can be used as a stand-alone connecting element.

The first and the second extremity 11, 12 of the upright 1 have each at least a seat 10 for the insertion of a cushioning element 13. This produces a coupling between the elements of the complex of the invention which does not damage its surface and tends to dampen the acoustic resonance particularly present in reticular structures. Preferably, the cushioning element 13 is a ring made of flexible plastic material or rubber (also called "o"-ring).

Advantageously, moreover, in a particular embodiment of the invention, each cross member 2 comprises second coupling means 9 to allow the connection of the upright 1 in a different position from that of the indentations 4, 5, 6, 7 as shown in Figure 1. This allows easily to obtain reticular structures having multiple planes of different horizontal dimensions, nesting one in the other.

The second coupling means 9 are preferably of the same type as the first coupling means 8.

Advantageously, the complex of elements of the present invention comprises at least a junction element 32. Said junction element 32 can be engaged on the pin 31, for instance by means of a through holes, and can be interposed at least between each upright 1 and the related cross member 2. The face of said junction element 32 in contact with the cross member 2 is counter-shaped relative to the surface of the cross member 2 itself. This allows to join uprights I and cross members 2 and, by breaking up the structure, it reduces its resonance. Advantageously, said junction element 32 is made of metallic material, preferably brass or bronze, differing from the material whereof uprights I and cross members 2 are made, also for purposes of sound damping.

The junction element 32 has on its own face opposite to the surface of the cross member 2 at least a seat 33 for the insertion of a cushioning element 13.

Conveniently, to achieve the support of the reticular structure on the floor or to determine the bearing points for a possible plane made of glass or other material, the complex of elements of the present invention further comprises at least three support elements 15 identifying a bearing plane in mutual combination.

Each of these support elements 15 comprises at least: on one side a first projection 16 for removable connection to the first coupling means 8, on the other side at least a seat 17 for the insertion of a cushioning element 18.

As shown in Figure 3, the support elements 15 can be coupled, through the engagement of the first projection 16 in the first coupling means 8, to one of the two extremities 11, 12 of the upright 1 to determine the bearing of the structure on the floor, or the bearing of a glass plane on the uprights 1 in correspondence with a summit of the structure or on a plane internal thereto determined by the uprights 1 themselves. The cushioning element 18, in this case, acts to preserve structure, floor and plane from any damages.

Also as shown in Figure 3, the support elements 15 can be coupled, through the first projection 16, to the second coupling means 9, to define a bearing plane in correspondence with the surface of the cross members 2.

Advantageously, each support element 15 is constituted by at least two identical pieces 15a, 15b, described as parts in Figures 5 and 6. The two pieces 15a, 15b comprise each: on one side, a housing 19 having third coupling means 20 for a second projection 28, the third coupling means 20 being identical to the first coupling means 8; at least on the same side at least a seat 26 for the insertion of a cushioning element 27; on the opposite side, the respective second projection 28 for removable connection to the third coupling means 20. In this way, the two pieces 15a, 15b can be mutually fastened, through the engagement of the second projection 28 in the third coupling means 20.

In this way, the active interposition is obtained of said cushioning element 27 between the two pieces 15a and 15b, enhancing the sound damping of the structure.

Conveniently, moreover, the complex of elements of the present invention comprises at least three bearing elements 29 identifying in combination a bearing plane.

As shown in Figure 5 and in Figure 6, each of said bearing elements 29 comprises at least: on one side a third bearing projection 30 so shaped as to have a single bearing point; on the other side at least a seat 34 for the insertion of a cushioning element 35 and, also on this other side, a housing 36 having fourth coupling means 37 identical to the first coupling means 8.

The bearing projection 30 is preferably a portion of sphere or of ellipsoid.

Advantageously, as shown in Figure 5 and in Figure 6, each of the bearing elements 29 is associated to the two pieces 15a, 15b of the support element 15 with the active interposition of the related cushioning elements 27, 35.

Preferably each of the bearing elements 29 and each of the two pieces 15a, 15b of the support element 15 is made of a different metal alloy to reduce acoustic resonance. In particular, the metal alloy can be chosen in a group including bronze, brass, aluminium alloy, lead steel.

As shown in Figure 1, the assembly constituted by the bearing element 29 and by the two pieces 15a and 15b can be used as a foot of the structure, through the engagement in the third coupling means 20 of the pin 31 connected to an upright 1. The point-like contact of the bearing projection 30 with the floor or with the ground, together with the presence of the cushioning elements 27, 35 and with the difference in metallic material, contributes to isolate the structure from any vibrations which may be transmitted by the floor or by the ground.

As shown in Figure 1, the bearing element 29, coupled with the junction element 33 and engaged on a pin 31 through the fourth coupling means 37, can be used as an element for closing and locking the structure in correspondence with the mutual engagement of two cross members 2 and of the related upright 1 in a node. Without coupling with the junction means 32, the bearing element 32 can be used as a finishing element or knob in correspondence with the first extremity 11 or of the second extremity 12 of the upright 1.

Preferably, if the complex of elements of the present invention is used to compose furnishing items to support sound generation or diffusion systems, and, thus, when a sound-proofing structure that is insensitive to vibrations is to be obtained, the cross members 2 are constructed starting from solid bars or rods.

In an alternative embodiment of the invention shown in dashed lines in Figures 7b and 7c, each cross member 2 comprises at least a central part 22, a first extremity 23 and a second extremity 24 connected to each other in removable fashion. This removable connection can also be obtained by means of fixed couplings or threads.

In particular, as shown in the right side of Figure 7b, the first and the second extremity 23, 24 can be simple plugs to be inserted on a removable tubular element constituting at least a portion of the central part 22. In the walls of said tubular element are obtained the through holes 25 and the second coupling means 9. To reinforce the structure, in correspondence with the indentations 4, 5, 6, 7, as shown in the left part of Figure 7c, appropriate inserts 38, 39, wherein appropriate through holes are obtained for the passage of the pins 31, can be inserted into the tubular element.

Alternatively, as shown in the left side of Figure 7b, the first and the second extremities 23, 24 can comprise, respectively, the entire area involved by the first and by the second indentation 4, 5, as well as by the second coupling means 9. Appropriately, in this case, in the presence of the third intermediate indentation 6, the central part 22 is subdivided into two tubular elements and into a solid central element, the solid central element comprising the third indentation 6 and second coupling means 9, if present.

The segmentation of the cross members 2 allows a greater versatility of assembly and a greater lightness of the structure, without thereby excessively impairing its mechanical soundness.

The invention achieves important advantages.

First of all, the capability of constructing solid and complex structure with extreme ease, using a very limited number of extremely simple elements. This allows to construct furnishing items of all kinds, such as chairs, tables, sofas, cabinets, shelves, furniture for stereophonic systems and the like.

Advantageously, the particular association of the elements to each other, and their conformation allows to obtain structures with high sound insulation, thereby allowing to construct furnishing items for sound generation and reproduction having extremely high fidelity, in particular systems equipped with vacuum tube amplifiers.

The invention thus conceived can be subject to numerous modifications and variations, without thereby departing from the scope of the invention as defined by the claims. Moreover, all components can be replaced by technically equivalent elements.

In practice all materials employed, as well as the dimensions, can be any, depending on requirements.

## Claims

1. A complex of elements for composing furnishing items, comprising at least a plurality of uprights (1) and at least a plurality of cross members (2) connectable to said uprights (1), **characterised in that** each cross member (2) has at least a first and a second indentation (4, 5) substantially transverse to the main development of the cross member (2) in order mutually to fix the cross members (2), and **in that** the uprights (1) are able to be engaged to said cross members (2) at least in correspondence with said indentations (4, 5).

2. A complex of elements as claimed in claim 1, **characterised in that** the first and the second indentation (4, 5) are oriented towards opposite faces of an axial plane of the cross member (2).

3. A complex of elements as claimed in claim 1, **characterised in that** the first and the second indentation (4, 5) are oriented towards a same face of an axial plane of the cross member (2).

4. A complex of elements as claimed in claim 2 or 3, **characterised in that** each cross member (2) comprises at least a third indentation (6) located in an intermediate position between the first and the second indentation (4, 5).

5. A complex of elements as claimed in any of the claims from 2 to 4, **characterised in that** the first and the second indentation (4, 5) are axially inclined by a predetermined angle relative to the longitudinal axis (21) of the cross member (2) and are convergent.

6. A complex of elements as claimed in any of the claims from 2 to 4, **characterised in that** the first and the second indentation (4, 5) are axially perpendicular to the longitudinal axis (21) of the cross member (2).

7. A complex of elements as claimed in any of the previous claims, **characterised in that** at least a cross member (2) has at least a shaped indentation (7) identified by the intersection of an indentation that is axially perpendicular to the longitudinal axis (21) of the cross member (2) with an indentation that is axially inclined relative to the same axis.

8. A complex of elements as claimed in claim 1, **characterised in that** the indentations (4, 5) involve half a section of the cross member (2).

9. A complex of elements as claimed in any of the previous claims, **characterised in that** each cross member (2) comprises at least a central part (22), a first extremity (23) and a second extremity (24) connected to each other in removable fashion.

10. A complex of elements as claimed in claim 9, **characterised in that** at least a portion of the central part (22) is a removable tubular element.

11. A complex of elements as claimed in any of the previous claims, **characterised in that** each upright (1) presents:
- at least at a first extremity (11) a pin (31) positioned coaxially to the upright (1) itself, able to be engaged at least in a through hole (25) obtained in correspondence with each indentation (4, 5, 6, 7) of the related cross members (2);
- at least a second extremity (12), first coupling means (8) at least for the pin (31) of a consecutive upright (1);
for connecting and securing at least an upright (1) to two related cross members (2) in correspondence with a fixed coupling.

12. A complex of elements as claimed in claim 11, **characterised in that** the pin (31) is removably engaged at least to the first extremity (11) of the upright (1).

13. A complex of elements as claimed in claim 11 or 12, **characterised in that** the first and the second extremity (11, 12) of the upright (1) have each at least a seat (10) for the insertion of a cushioning element (13).

14. A complex of elements as claimed in any of the claims from 11 to 13, **characterised in that** each cross member (2) comprises second coupling means (9) to allow the connection of the upright (1) in a different position from that of the indentations (4, 5, 6, 7).

15. A complex of elements as claimed in any of the claims from I 1 to 14, **characterised in that** if further comprises at least a junction element (32) able to be engaged on the pin (31) and to be interposed at least between each upright (1) and the related cross member (2), the face of said junction element (32) in contact with the cross member (2) being counter-shaped relative to the surface of the cross member (2) itself.

16. A complex of elements as claimed in claim 15, **characterised in that** said junction element (32) presents on its own face opposite to the surface of the cross member (2) at least a seat (33) for the insertion of a cushioning element (13).

17. A complex of elements as claimed in claim 15 or 16, **characterised in that** said junction element (32) is made of a different material from the material whereof uprights (1) and cross members (2) are made.

18. A complex of elements as claimed in claim 17, **characterised in that** said junction element (32) is made of metallic material.

19. A complex of elements as claimed in any of the claims from 11 to 14, **characterised in that** it further comprises at least three support elements (15) identifying in combination a bearing plane, each comprising at least: on one side a first projection (16) for removable connection to said first coupling means (8); on the other side at least a seat (17) for the insertion of a cushioning element (18).

20. A complex of elements as claimed in claim 19, **characterised in that** each support element (15) is constituted by at least two identical pieces (15a, 15b) each comprising:
on one side, a housing (19) presenting third coupling means (20) for a second projection (28), the third coupling means (20) being identical to the first coupling means (8);
at least on the same side at least a seat (26) for the insertion of a cushioning element (27); on the opposite side, the respective second projection (28) for the removable connection to the third coupling means (20);
in such a way as to be able to be mutually fastened with the active interposition of said cushioning element (27).

21. A complex of elements as claimed in any of the claims from 11 to 14 or as claimed in claim 20, **characterised in that** it further comprises at least three bearing elements (29) identifying in combination a bearing plane, each comprising at least: on the one side a third bearing projection (30) so shaped as to present a single bearing point; on the other side at least a seat (34) for the insertion of a cushioning element (35) and a housing (36) presenting fourth coupling means (37) identical to the first coupling means (8).

22. A complex of elements as claimed in claim 21, **characterised in that** each of said three bearing elements (29) is associated to the two pieces (15a, 15b) of the support element (15) with the active interposition of the related cushioning elements (27, 35).

23. A complex of elements as claimed in claim 22, **characterised in that** each of said three bearing elements (29) and each of the two pieces (15a, 15b) of the support element (15) is made of a different metal alloy to reduce acoustic resonance.

24. A complex of elements as claimed in claim 1, **characterised in that** the uprights (1) and the cross members (2) are made of metallic material.

25. A complex of elements as claimed in claim I or 12 or 14 or as claimed in any of the claims from 19 to 22 **characterised in that** the first coupling means (8) are constituted by a nut screw of predetermined length whereon a thread obtained on the pin (31) can be engaged.

## Patentansprüche

1. Elementengruppe zum Zusammensetzen von Möbelteilen, enthaltend wenigstens eine Anzahl von Pfosten (1) und wenigstens eine Anzahl von Querstücken (2), die mit den genannten Pfosten (1) verbindbar sind, **dadurch gekennzeichnet, dass** jedes Querstück (2) wenigstens eine erste und eine zweite Vertiefung (4, 5) aufweist, im wesentlichen quer zu der Hauptentwicklungsrichtung des Querstückes (2), um die Querstücke (2) gegenseitig miteinander zu befestigen, und dadurch, dass die Pfosten (1) in der Lage sind, mit den genannten Querstücken (2) verbunden zu werden, und zwar wenigstens in Übereinstimmung mit den genannten Vertiefungen (4, 5).

2. Elementengruppe nach Patentanspruch 1, **dadurch gekennzeichnet, dass** die ersten und zweiten Vertiefungen (4, 5) den entgegengesetzten Flächen einer axialen Ebene des Querstückes (2) zugewandt sind.

3. Elementengruppe nach Patentanspruch 1, **dadurch gekennzeichnet, dass** die ersten und zweiten Vertiefungen (4, 5) derselben Fläche einer axialen Ebene des Querstückes (2) zugewandt sind.

4. Elementengruppe nach Patentanspruch 2 oder 3, **dadurch gekennzeichnet, dass** jedes Querstück (2) wenigstens eine dritte Vertiefung (6) enthält, angeordnet in einer Zwischenposition zwischen der ersten und zweiten Vertiefung (4, 5).

5. Elementengruppe nach einem jeden der Patentansprüche von 2 bis 4, **dadurch gekennzeichnet, dass** die ersten und zweiten Vertiefungen (4, 5) im Verhältnis zu der Längsachse (21) des Querstückes (2) axial um einen bestimmten Winkel geneigt und konvergierend sind.

6. Elementengruppe nach einem jeden der Patentansprüche von 2 bis 4, **dadurch gekennzeichnet, dass** die ersten und zweiten Vertiefungen (4, 5) im Verhältnis zu der Längsachse (21) des Querstückes (2) axial lotrecht sind.

7. Elementengruppe nach einem beliebigen der vorstehenden Patentansprüche, **dadurch gekennzeichnet, dass** wenigstens ein Querstück (2) wenigstens eine geformte Vertiefung (7) hat, beschrieben durch die Schnittlinie einer Vertiefung, die axial lotrecht zu der Längsachse (21) des Querstückes (2) verläuft, mit einer Vertiefung, die axial im Verhältnis zu derselben Achse geneigt ist.

8. Elementengruppe nach Patentanspruch 1, **dadurch gekennzeichnet, dass** die Vertiefungen (4, 5) einen halben Querschnitt des Querstückes (2) einbeziehen.

9. Elementengruppe nach einem beliebigen der vorstehenden Patentansprüche, **dadurch gekennzeichnet, dass** jedes Querstück (2) wenigstens einen mittleren Teil (22), ein erstes Ende (23) und ein zweites Ende (24) enthält, die auf lösbare Weise miteinander verbunden sind.

10. Elementengruppe nach Patentanspruch 9, **dadurch gekennzeichnet, dass** wenigstens ein Abschnitt des mittleren Teils (22) ein abnehmbares rohrförmiges Element ist.

11. Elementengruppe nach einem beliebigen der vorstehenden Patentansprüche, **dadurch gekennzeichnet, dass** jeder Pfosten (1) wie folgt aufweist:
an wenigstens einem ersten Ende (11) einen Zapfen (31), angeordnet koaxial zu dem Pfosten (1) selbst und in der Lage, in wenigstens eine durchgehende Bohrung (25) eingesetzt zu werden, die entsprechend in einer jeden Vertiefung (4, 5, 6, 7) des betreffenden Querstückes (2) erhalten ist;
an wenigstens einem zweiten Ende (12) erste Verbindungsmittel (8), wenigstens für den Zapfen (31) eines folgenden Pfostens (1);
zum Anschliessen und Sichern wenigstens eines Pfostens (1) an zwei betreffenden Querstücken (2) in einer festen Verbindung.

12. Elementengruppe nach Patentanspruch 11, **dadurch gekennzeichnet, dass** der Zapfen (31) abnehmbar wenigstens in das erste Ende (11) des Pfostens (1) eingesetzt ist.

13. Elementengruppe nach Patentanspruch 11 oder 12, **dadurch gekennzeichnet, dass** die ersten und zweiten Enden (11, 12) des Pfostens (1) wenigstens einen Sitz (10) zum Einsetzen eines Pufferelementes (13) haben.

14. Elementengruppe nach einem beliebigen der Patentansprüche von 11 bis 13, **dadurch gekennzeichnet, dass** jedes Querstück (2) zweite Verbindungsmittel (9) enthält, um das Anschliessen des Pfostens (1) in einer anderen Position als in jener der Vertiefungen (4, 5, 6, 7) zu erlauben.

15. Elementengruppe nach einem beliebigen der Patentansprüche von 11 bis 14, **dadurch gekennzeichnet, dass** sie ausserdem wenigstens ein Verbindungselement (32) enthält, dazu bestimmt, auf den Zapfen (31) geschoben und wenigstens zwischen einem jeden Pfosten (1) und dem betreffenden Querstück (2) eingesetzt zu werden, wobei die Fläche des genannten Verbindungselementes (32) im Kontakt mit dem Querstück (2) entsprechend der Oberfläche des Querstückes (2) selbst gegengeformt ist.

16. Elementengruppe nach Patentanspruch 11, **dadurch gekennzeichnet, dass** das genannte Verbindungselement (32) an der zu der Oberfläche des Querstückes (2) entgegengesetzten Fläche wenigstens einen Sitz (33) zum Einsetzen eines Pufferelementes (13) aufweist.

17. Elementengruppe nach Patentanspruch 15 oder 16, **dadurch gekennzeichnet, dass** das genannte Verbindungselement (32) aus einem anderen Material hergestellt ist als das Material, aus welchem die Pfosten (1) und die Querstücke (2) gemacht sind.

18. Elementengruppe nach Patentanspruch 17, **dadurch gekennzeichnet, dass** das genannte Verbindungselement (32) aus einem metallenen Material hergestellt ist.

19. Elementengruppe nach einem beliebigen der Patentansprüche von 11 bis 14, **dadurch gekennzeichnet, dass** sie ausserdem wenigstens drei Stützelemente (15) enthält, welche zusammen eine Auflageebene beschreiben, jedes wenigstens enthaltend: auf der einen Seite einen ersten Vorsprung (16) zum lösbaren Anschliessen an die genannten ersten Verbindungsmittel (8); auf der anderen Seite wenigstens einen Sitz (17) zum Einsetzen eines Pufferelementes (18).

20. Elementengruppe nach Patentanspruch 19, **dadurch gekennzeichnet, dass** jedes Stützelement (15) aus wenigstens zwei gleichen Teilen (15a, 15b) gebildet ist, jedes enthaltend:
auf der einen Seite einen Sitz (19) mit dritten Verbindungsmitteln (20) für einen zweiten Vorsprung (28), wobei die dritten Verbindungsmittel (20) identisch mit den ersten Verbindungsmitteln (8) sind;
wenigstens auf derselben Seite wenigstens einen Sitz (26) zum Einsetzen eines Pufferelementes (27);
auf der entgegengesetzten Seite den jeweiligen zweiten Vorsprung (28) zum lösbaren Anschliessen an die dritten Verbindungsmittel (20);
so dass sie durch das aktive Zwischensetzen des genannten Pufferelementes (27) miteinander befestigt werden können.

21. Elementengruppe nach einem beliebigen der Patentansprüche von 11 bis 14 oder nach Patentanspruch 20, **dadurch gekennzeichnet, dass** sie ausserdem wenigstens drei Trägerelemente (29) enthält, welche zusammen eine Auflageebene beschreiben, jedes enthaltend: auf der einen Seite einen dritten Trägervorsprung, der so geformt ist, dass er einen einzigen Auflagepunkt bildet; auf der anderen Seite wenigstens einen Sitz (34) zum Einsetzen eines Pufferelementes (35), sowie eine Aufnahme (36), die ein viertes Verbindungselement (37) aufweist, welches identisch ist mit dem ersten Verbindungselement (8).

22. Elementengruppe nach Patentanspruch 21, **dadurch gekennzeichnet, dass** jedes der genannten drei Trägerelemente (29) den beiden Teilen (15a, 15b) des Stützelementes (15) zugeordnet ist, und zwar mit dem aktiven Zwischensetzen des betreffenden Pufferelementes (27, 35).

23. Elementengruppe nach Patentanspruch 22, **dadurch gekennzeichnet, dass** jedes der genannten drei Trägerelemente (29) und jedes der beiden Teile (15a, 15b) des Stützelementes (15) aus einer anderen metallenen Legierung hergestellt ist, um die akustische Resonanz zu reduzieren.

24. Elementengruppe nach Patentanspruch 1, **dadurch gekennzeichnet, dass** die Pfosten (1) und die Querstücke (2) aus metallenem Material hergestellt sind.

25. Elementengruppe nach Patentanspruch 11 oder 12 oder 14 oder nach einem beliebigen der Patentansprüche von 19 bis 22, **dadurch gekennzeichnet, dass** die ersten Verbindungsmittel (8) aus einer Mutterschraube von bestimmter Länge bestehen, in welche ein sich an dem Zapfen (31) befindliches Gewinde greifen kann.

## Revendications

1. Un complexe d'éléments pour monter des meubles, comprenant au moins une pluralité de montants (1) et au moins une pluralité d'éléments transversaux (2) pouvant être reliés audits montants (1), **caractérisé en ce que** chaque élément transversal (2) présente au moins une première et une seconde entaille (4, 5) substantiellement transversales au développement principal de l'élément transversal (2) de manière à fixer entre eux les éléments transversaux (2), et **en ce que** les montants (1) peuvent engager lesdits éléments transversaux (2) au moins en correspondance desdites entailles (4, 5).

2. Un complexe d'éléments selon la revendication 1, **caractérisé en ce que** la première et la seconde entaille (4, 5) sont orientées vers des faces opposées d'un plan axial de l'élément transversal (2).

3. Un complexe d'éléments selon la revendication 1, **caractérisé en ce que** la première et la seconde entaille (4, 5) sont orientées vers une même face d'un plan axial de l'élément transversal (2).

4. Un complexe d'éléments selon la revendication 2 ou 3, **caractérisé en ce que** chaque élément transversal (2) comprend au moins une troisième entaille (6) positionnée dans une position intermédiaire entre la première et la seconde entaille (4, 5).

5. Un complexe d'éléments selon n'importe laquelle des revendications 2 à 4, **caractérisé en ce que** la première et la seconde entaille (4, 5) sont axialement inclinées selon un angle prédéterminé par rapport à l'axe longitudinal (21) de l'élément transversal (2) et sont convergentes.

6. Un complexe d'éléments selon n'importe laquelle des revendications 2 à 4, **caractérisé en ce que** la première et la seconde entaille (4, 5) sont axialement perpendiculaires à l'axe longitudinal (21) de l'élément transversal (2).

7. Un complexe d'éléments selon n'importe laquelle des revendications précédentes, **caractérisé en ce qu'**au moins un élément transversal (2) présente au moins une entaille conformée (7) identifiée par l'intersection d'une entaille axialement perpendiculaire à l'axe longitudinal (21) de l'élément transversal (2) avec une entaille axialement inclinée par rapport au même axe.

8. Un complexe d'éléments selon la revendication 1, **caractérisé en ce que** les entailles (4, 5) concernent la moitié de la section de l'élément transversal (2).

9. Un complexe d'éléments selon n'importe laquelle des revendications précédentes, **caractérisé en ce que** chaque élément transversal (2) comprend au moins une partie centrale (22), une première extrémité (23) et une seconde extrémité (24) reliées entre elles de manière amovible.

10. Un complexe d'éléments selon la revendication 9, **caractérisé en ce qu'**au moins une portion de la partie centrale (22) est un élément tubulaire amovible.

11. Un complexe d'éléments selon n'importe laquelle des revendications précédentes, **caractérisé en ce que** chaque montant (1) présente:
- au moins en une première extrémité (11) une tige (31) positionnée coaxialement au montant (1) même, pouvant être engagée au moins dans un orifice passant (25) prévu en correspondance de chaque entaille (4, 5, 6, 7) du relatif élément transversal (2);
- au moins en une seconde extrémité (12), des premiers moyens d'accouplement (8) au moins pour la tige (31) d'un montant (1) consécutif;
pour relier et fixer au moins un montant (1) à deux relatifs éléments transversaux (2) en correspondance d'un accouplement fixe.

12. Un complexe d'éléments selon n'importe la revendication 11, **caractérisé en ce que** la tige (31) est engagée de manière amovible au moins à la première extrémité (11) du montant (1).

13. Un complexe d'éléments selon la revendication 11 ou 12, **caractérisé en ce que** la première et la seconde extrémité (11, 12) du montant (1) ont toutes deux au moins un logement (10) pour l'insertion d'un élément amortissant (13).

14. Un complexe d'éléments selon n'importe laquelle des revendications 11 à 13, **caractérisé en ce que** chaque élément transversal (2) comprend des seconds moyens d'accouplement (9) permettant la liaison du montant (1) dans une position différente de celle des entailles (4, 5, 6, 7).

15. Un complexe d'éléments selon n'importe laquelle des revendications 11 à 14, **caractérisé en ce qu'**il comprend en outre au moins un élément de jonction (32) pouvant être engagé sur la tige (31) et être interposé au moins entre chaque montant (1) et le relatif élément transversal (2), la face de chaque élément de jonction (32) en contact avec l'élément transversal (2) étant de forme complémentaire à la surface de l'élément transversale lui-même.

16. Un complexe d'éléments selon la revendication 15, **caractérisé en ce que** ledit élément de jonction (32) présente sur sa propre face opposée à la surface de l'élément transversal (2) au moins un logement (33) pour l'insertion d'un élément amortissant (13).

17. Un complexe d'éléments selon la revendication 15 ou 16, **caractérisé en ce que** ledit élément de jonction (32) est réalisé en un matériau différent de celui constituant aussi bien les montants (1) que les éléments transversaux (2).

18. Un complexe d'éléments selon la revendication 17, **caractérisé en ce que** ledit élément de jonction (32) est réalisé en un matériau métallique.

19. Un complexe d'éléments selon n'importe laquelle des revendications 11 à 14, **caractérisé en ce qu'**il comprend de plus au moins trois éléments de support (15) délimitant en combinaison un plan de support, chacun d'entre eux comprenant au moins: sur un côté une première saillie (16) pour la liaison amovible audits premiers moyens d'accouplement (8); sur l'autre côté au moins un logement (17) pour l'insertion d'un élément amortissant (18).

20. Un complexe d'éléments selon la revendication 19, **caractérisé en ce que** chaque élément de support (15) est constitué d'au moins deux pièces identiques (15a, 15b), chacune comprenant:
- sur un côté, un logement (19) présentant des troisièmes moyens d'accouplement (20) pour une seconde saillie (28), les troisièmes moyens d'accouplement (20) étant identiques aux premiers moyens d'accouplement (8);
- au moins sur le même côté au moins un logement (26) pour l'insertion d'un élément d'amortissement (27);
- sur le coté opposé, la respective seconde saillie (28) pour la liaison amovible aux troisièmes moyens d'accouplement (20);
de manière à pouvoir être mutuellement fixés entre elles avec l'interposition active dudit élément d'amortissement (27).

21. Un complexe d'éléments selon n'importe laquelle des revendications 11 à 14 ou la revendication 20, **caractérisé en ce qu'**il comprend de plus au moins trois éléments de support (29) constituant en combinaison un plan de support, chacun d'entre eux comprenant au moins: sur un côté une troisième saillie de support (30) conformée de manière à présenter un seul point de support; sur l'autre côté au moins un logement (34) pour l'insertion d'un élément d'amortissement (35) et un logement (36) présentant des quatrièmes moyens d'accouplement (37) identiques aux premiers moyens d'accouplement (8).

22. Un complexe d'éléments selon la revendication 21, **caractérisé en ce que** chacun des trois éléments de support (29) est associé aux deux pièces (15a, 15b) de l'élément de support (15) avec l'interposition active des relatifs éléments d'amortissement (27, 35).

23. Un complexe d'éléments selon la revendication 22, **caractérisé en ce que** chacun des trois éléments de support (29) et chacune des deux pièces (15a, 15b) de l'élément de support (15) est réalisé dans un alliage métallique différent pour réduire la résonance acoustique.

24. Un complexe d'éléments selon la revendication 1, **caractérisé en ce que** les montants (1) et les éléments transversaux (2) sont réalisés en un matériau métallique.

25. Un complexe d'éléments selon la revendication 11 ou 12 ou 14 ou selon n'importe laquelle des revendications 19 à 22, **caractérisé en ce que** les premiers Moyens d'accouplement (8) sont constitués par un écrou de longueur prédéterminée sur lequel peut être engagé un filetage prévu sur la tige (31).
